Europäisches Patentamt

European Patent Office

Office européen des brevets

(11) Veröffentlichungsnummer: **0 208 133**
**A2**

## (12) EUROPÄISCHE PATENTANMELDUNG

(21) Anmeldenummer: 86107547.1

(22) Anmeldetag: 03.06.86

(51) Int. Cl.⁴: **B 23 Q 37/00**
**B 23 Q 39/04**

(30) Priorität: 10.06.85 DE 3520769

(43) Veröffentlichungstag der Anmeldung:
14.01.87 Patentblatt 87/3

(84) Benannte Vertragsstaaten:
DE FR GB IT

(71) Anmelder: Patent-Treuhand-Gesellschaft für elektrische Glühlampen mbH
Hellabrunner Strasse 1
D-8000 München 90(DE)

(72) Erfinder: Grahmann, Helmut, Dipl.-Ing.
Am Weizenfeld 53
D-8904 Friedberg(DE)

(74) Vertreter: Strasse, Joachim, Dipl.-Ing. et al,
Strasse und Stoffregen European Patent Attorneys
Zweibrückenstrasse 17
D-8000 München 2(DE)

(54) Modular aufgebaute Bearbeitungsstation für Montagevorgänge.

(57) Modular aufgebaute Bearbeitungsstation für Montagevorgänge, insbesondere von Glühlampen, zum Einsatz auf Rundtakt- oder Längstaktmaschinen, welche synchron mit einer Schaltbewegung eine kontinuierliche Drehbewegung über einen Antrieb auf eine in der Bearbeitungsstation integrierte an den Antrieb angekuppelte Steuerwelle übertragen, die die Drehbewegung an nach dem Baukastenprinzip übereinander angeordnete Module abgibt, die die Drehbewegung in eine andere für den Montagevorgang benötigte Bewegungsform umwandeln, wobei eine zwischen Antrieb und Steuerwelle angeordnete Steckkupplung über einen Kupplungszapfen erfolgt, der so gestaltet ist, daß nur eine einzige Steckposition möglich ist, daß die Module über Zentriervorrichtungen in Richtung der Steuerwelle exakt ausgerichtet und mittels Spannvorrichtungen am Gerätefuß fixiert sind, und daß zwischen und/oder am obersten freien Ende der Steuerwelle ein Lagermodul für die Steuerwelle eingefügt ist.

EP 0 208 133 A2

## Modular aufgebaute Bearbeitungsstation
## für Montagevorgänge

Die Erfindung betrifft eine modular aufgebaute Bearbeitungsstation für Montagevorgänge beliebiger Produkte, insbesondere Glühlampen. Derartige Bearbeitungsstationen werden bei Rundtaktmaschinen und Längstaktmaschinen eingesetzt, die synchron mit der Schaltbewegung eine kontinuierliche Drehbewegung zu einer in der Bearbeitungsstation angeordneten Steuerwelle übertragen. Diese Übertragung kann mittels umlaufender Kette, Stirnrad- oder Kegelradantrieb erfolgen. Die in der Bearbeitungsstation integrierte Steuerwelle gibt ihre Drehbewegung an Arbeitsmodule ab, die in verschiedener Ausführung nach dem Baukastenprinzip übereinander auf einem Gerätefuß angeordnet werden, der auf dem Maschinentisch der Rundtakt- oder Längstaktmaschine aufgesetzt ist. Die Module enthalten unterschiedlich ausgebildete Steuerkurven, über die die Drehbewegung der Steuerwelle in eine andere für die Montagevorgänge benötigte Bewegungsform umgewandelt wird.

Die DE-OS 28 27 480 beschreibt eine Montagemaschine, die derartige modular aufgebaute Bearbeitungsstationen verwendet. Auf der Unterseite des Maschinentisches ist ein Antriebsritzel angeordnet, das die Drehbewegung der Montagemaschine aufnimmt und etwa über eine Steckkupplung auf die Steuerwelle überträgt. Der Gerätefuß ist für alle Bearbeitungsstationen mit einheitlicher Höhe ausgebildet und enthält die einzige Lagerung für die Steuerwelle, so daß sich eine fliegende Lagerung ergibt, die bei einer größeren Anzahl von aufeinander gesetzten Bewegungs- oder Arbeitsmodulen zu nicht akzeptierbaren Ungenauigkeiten im Bewegungsausmaß bei der Bearbeitung führt. Über die Ausbildung der Steckkupplung ist in der Druckschrift nichts ausgesagt. Zur Schrittschaltbewegung für einen Antrieb von auf dem Maschinentisch anzubringenden Bearbeitungsgeräten ist oberhalb des Maschinentisches ein Drehtisch vorgesehen, der eine Außenverzahnung besitzt, welche in die Verzahnung von Zahnrädern des Geräteantriebs eingreift. Hierdurch können beispielsweise Geräte, die Übersetzungs- und Zubringerfunktionen ausüben, über einen Schaltteller betätigt werden, der durch die vom Drehtisch abgenommene Schrittschaltbewegung angetrieben wird. Diese Drehtischanordnung ist verhältnismäßig kompliziert und aufwendig. Störend ist ferner, daß die Außenverzahnung des Drehtisches und der Antrieb zum Schaltteller verhältnismäßig ungeschützt erfolgt, so daß Unfallgefahr gegeben ist. Die Druckschrift gibt keinerlei Hinweise darauf, wie die einzelnen Module übereinander angeordnet und befestigt werden. Eine exakte und stabile Anbringung ist jedoch für ein ordnungsgemäßes Arbeiten der Bearbeitungsstation von wesentlicher Bedeutung.

Der Erfindung liegt die Aufgabe zugrunde, eine modular aufgebaute Bearbeitungsstation der gattungsgemäßen Art so weiterzubilden, daß bei Vereinfachung der Anordnung eine Steigerung der Flexibilität bezüglich des unterschiedlichen Aufbaus und der bei der Bearbeitung erzielten Genauigkeit erreicht und die Synchronisation beim Aufsetzen der Bearbeitungsstation auf die Montagemaschine auf jeden Fall gewährleistet ist.

Diese Aufgabe wird erfindungsgemäß gelöst durch eine Bearbeitungsstation mit den Merkmalen des Kennzeichens des Patentanspruchs 1.

Die spezielle Ausbildung der Steckkupplung, erlaubt nur eine einzige eindeutige Verbindung der Steuerwelle mit dem Antriebsritzel. Das Festspannen der übereinander angeordneten Module unter exakter Ausrichtung zueinander und unter Einfügung eines Endlagers für die Steuerwelle geben der Anordnung eine hervorragende Stabilität.

Bevorzugte Weiterbildungen der erfindungsgemäßen Bearbeitungsstation sind in den Unteransprüchen gekennzeichnet.

Durch die in der Höhe abgestuften Gerätefüße lassen sich die Bewegungs- und Arbeitsmodule an sehr unterschiedlichen Höhen anordnen.

Die Übertragung der Schaltbewegung von der Maschine erfolgt bevorzugt über eine auf dem Umfang des Gerätefußes angeordnete Vorrichtung, so daß über den Maschinentisch hinaus verlaufende Antriebe wegfallen.

Weitere Merkmale und Vorteile der erfindungsgemäßen Bearbeitungsstation ergeben sich aus der nachfolgenden Beschreibung von Ausführungsbeispielen anhand der Zeichnung.

Es zeigen:

Fig. 1 eine Seitenansicht, teilweise im Schnitt, wesentlicher Teile einer Montagemaschine bei der die erfindungsgemäße Bearbeitungsstation eingesetzt werden kann,

Fig. 2 ein allgemeines Schema über die Verkettung zwischen Montagemaschinen gemäß Fig. 1 in Draufsicht,

Fig. 3 eine schematisierte Darstellung einer Ausführungsform einer erfindungsgemäßen Bearbeitungsstation in Seitenansicht,

Fig. 4 eine Seitenansicht im Schnitt einer Ausführungsform einer erfindungsgemäßen Bearbeitungsstation in zusammengebautem Zustand,

Fig. 5 eine auseinandergezogene Darstellung von unterschiedlichen modularen Baueinheiten für eine Bearbeitungsstation,

Fig. 6 eine Perspektivansicht eines beispielsweisen Moduls einer Bearbeitungsstation in auseinandergezogener Darstellung und

Fig. 7 eine Draufsicht auf den Modul nach Fig. 6.

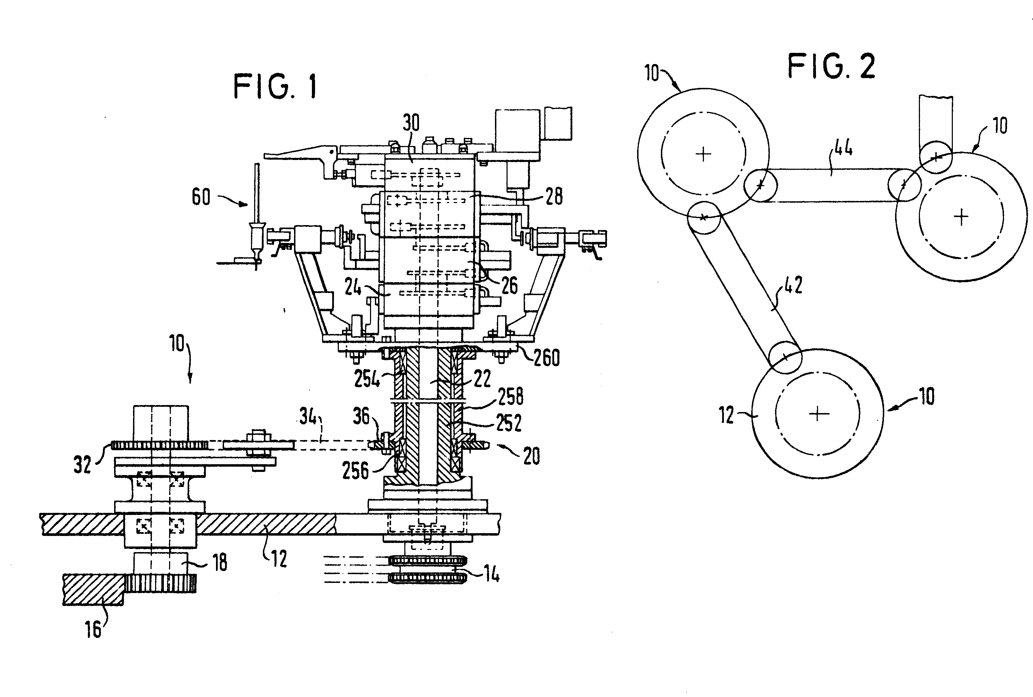

Figur 1 und 2 zeigen, daß auf einem Maschinentisch 12 einer im Prinzip bekannten Montagemaschine 10 verteilt über den Umfang des Maschinentisches Bearbeitungsstationen 20 angeordnet sind. Über ein unterhalb des Maschinentisches 12 angebrachtes Ritzel 14 erhalten die Bearbeitungsstationen von einem nicht gezeigten zentralen Antrieb der Montagemaschine einen kontinuierlichen Antrieb, der über eine in der Bearbeitungsstation 20 befindliche Steuerwelle 22 an verschiedene übereinander angeordnete Arbeitsmodule 24,26,28,30 übertragen wird. Je nach Aufbau der Arbeitsmodule 24 bis 30 führen diese unterschiedliche Arbeitsgänge aus. Die kontinuierliche Drehbewegung wird auf das Ritzel 14 wahlweise mittels umlaufender Kette, Stirnrad oder Kegelantrieb übertragen.

Die Bearbeitungsstation 20 führt auch eine Schaltbewegung aus, die beispielsweise von einem Zahnrad 16 der Montagemaschine über ein Ritzel 18, ein Kettenrad 32, eine Kette 34 auf einen an der Bearbeitungsstation 20 angeordneten Stern 36 übertragen wird.

Wie in Figur 2 schematisch dargestellt, können mehrere Montagemaschinen 10 über Verkettungsglieder 42,44, etwa Kettenantriebe oder dergleichen miteinander zur synchronen Taktung verkettet werden.

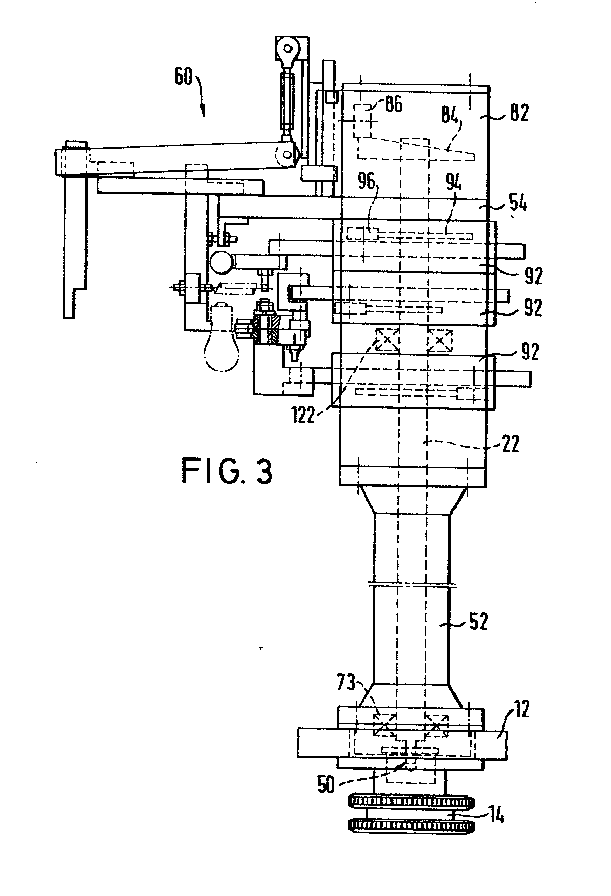

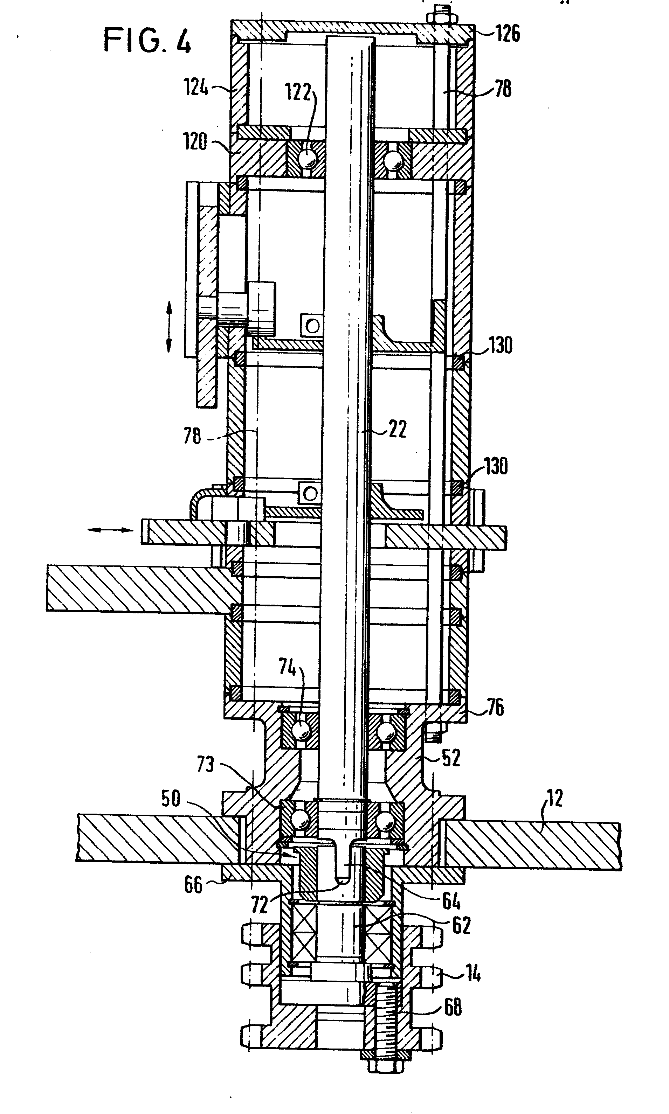

Die Figuren 3 bis 5 geben den Aufbau von Bearbeitungsstationen aus modularen Einheiten und deren Antrieb im einzelnen wieder. So zeigt Figur 3 das unterhalb des Montagetisches 12 angebrachte Antriebsritzel 14, das über eine Gerätekupplung 50 mit der Steuerwelle 22 gekuppelt ist, die in einem am Montagetisch 12 angebrachten Gerätefuß 52 gelagert ist (Figur 4). Die Steuerwelle 22 ist vorzugsweise zentral durch verschiedene turmartig übereinander angeordnete Bewegungs- und Arbeitsmodule geführt, die den Arbeitsmodulen 24 bis 30 der Figur 1 entsprechen. Zwischen den Bewegungs- oder Arbeitsmodulen können Montageplatten 54 angeordnet werden, die seitlich über die Arbeitsmodule hinausragen und zur Aufnahme von Lagerböcken, zusätzlichen Führungen, Zangenelementen und dgl. gerätespezifischen Aufbauten dienen, wie sie allgemein in den Figuren 1 und 3 mit 60 bezeichnet sind.

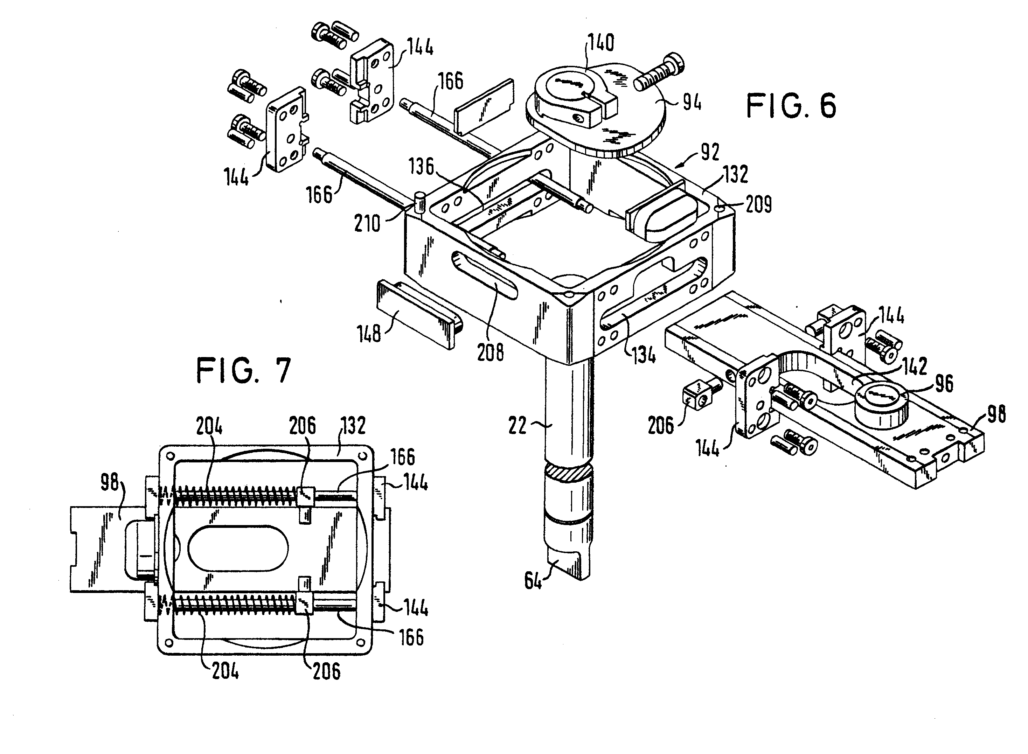

Figur 4 zeigt am deutlichsten, wie die Übertragung der kontinuierlichen Drehbewegung von der Montagemaschine in die Bearbeitungsstationen erfolgt. In einem an der Unterseite des Maschinentisches 12 oder des Gerätefußes 52 angebrachten Stutzen 64 ist ein Kupplungszapfen 62 gelagert, der beispielsweise über eine Schraube 68 mit dem Antriebsritzel 14 verbunden ist. Die Gerätekupplung 50 ist erfindungsgemäß so ausgebildet, daß sich die Steuerwelle 22 ohne Zuhilfenahme von Werkzeugen lösen, insbesondere abheben läßt. Hierzu ist an der oberen Stirnseite des Kupplungszapfens 62 eine Ausnehmung, vorzugsweise ein Schlitz 72 vorgesehen, in den ein flacher Ansatz 64 (vgl. auch Figur 6) am unteren Stirnende der Steuerwelle 22 paßt. Vorzugsweise ist die lösbare Gerätekupplung 50 derart ausgebildet, daß nur eine eindeutige Kupplung zwischen dem Kupplungszapfen 62 und der Steuerwelle 22 möglich ist. Dies gewährleistet eine eindeutige Synchronisierung des Antriebs mit der notwendigen Bewegung der verschiedenen Arbeitsmodule. Alternativen zu der gezeigten Ausführungsform der Gerätekupplung 50 wären Ausbildungen der Ausnehmung 72 bzw. des unteren Endes 64 der Steuerwelle 22 mit halbkreisförmigen, viereckigen oder ovalen Querschnitt oder eine definierte Nut-/Federkupplung. Hierbei sollte jeweils die Möglichkeit bestehen, allein durch Abheben der Steuerwelle bzw. der gesamten Bearbeitungsstation eine Trennung vom Antrieb vorzunehmen. Auch ein T- oder L-förmiger Querschnitt wäre anwendbar.

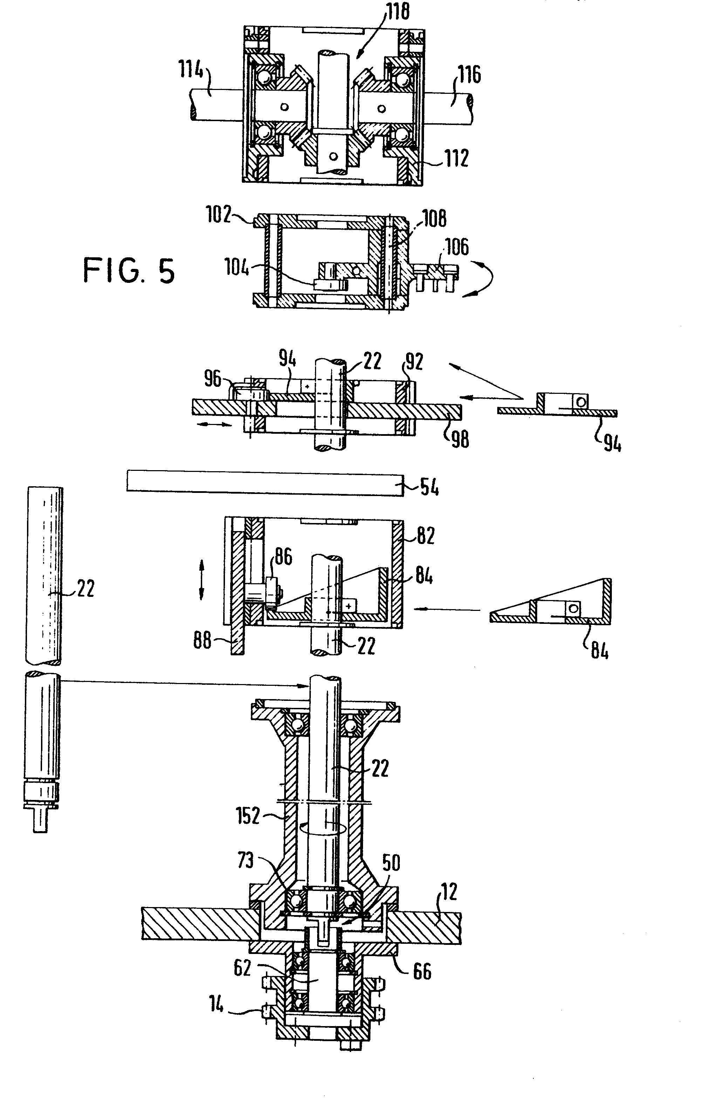

Die Gegenüberstellung der Anordnungen der Figuren 4 und 5 zeigen deutlich, daß der Gerätefuß 52 verschiedene Ausbildungen, insbesondere verschiedene Höhen haben kann. So ist der Gerätefuß 52 der Figur 4 mit einer besonders geringen Höhe ausgeführt, während der Gerätefuß 152 der Figur 5 wesentlich höher ist. Gemäß Figur 4 ist der Gerätefuß vorzugsweise in eine Öffnung im Maschinentisch 12 eingesetzt und entweder, wie gezeigt, mit dem Ansatz 66 verbunden, insbesondere verschraubt wird, oder daß gemäß Figur 5 der Gerätefuß 152 am Maschinentisch 12 befestigt wird. Gegebenenfalls reicht auch bei entsprechender Passung ein Einsetzen in den Maschinentisch 12.

Der Gerätefuß 52 enthält entsprechende Lager 72,74 für die Lagerung der Steuerwelle 22 und ist an seinem oberen Stirnende mit Befestigungsmöglichkeiten für aufgesetzte Bewegungs- und Arbeitsmodule versehen. Beim Ausführungsbeispiel ist das obere Stirnende des Gerätefußes dazu durch einen horizontalen Flansch 76 erweitert, der mit Bohrungen zum Durchführen von Gewindestangen 78 versehen ist.

Die Figuren 4 und 5 zeigen die turmartige Anordnung verschiedener Bewegungs- und Arbeitsmodule. Ein erstes Bewegungsmodul 82 für Vertikalbewegungen wird mittels einer von der Steuerwelle 22 angetriebenen Topfkurvenscheibe 84 gesteuert. Auf dieser läuft eine Rolle 86, die ein Arbeitselement 88 unter der Drehung der Steuerwelle 22 auf- und abbewegt. Ein zweites Bewegungsmodul 92 für eine Horizontalbewegung verwendet eine Scheibenkurve 94 (vergleiche auch Figur 6), die über eine Rolle 96 den Schieber 98 unter Drehung der Steuerwelle 22 in horizontaler Richtung hin- und herbewegt. Mittels eines dritten Bewegungsmoduls 102 läßt sich über eine nicht gezeigte Scheibenkurve und eine Rolle 104 eine Schwenkbewegung eines Armes 106 um eine Achse 108 durchführen. Das Bewegungsmodul 112 dient zur Änderung der Richtung der Drehbewegung, wobei die Drehbewegung der Steuerwelle um eine vertikale Achse geändert wird in eine Drehbewegung von Achsen 114,116 um eine horizontale Achse, und zwar mittels der Kegelzahnradanordnung 118. Wie bereits erwähnt, können zwischen den einzelnen Bewegungs- und Arbeitsmodulen Montageplatten 54 eingefügt werden.

Figur 4 zeigt, daß die turmartig übereinander angeordneten Bewegungsmodule durch ein Lagermodul 120 mit einem Lager 122 für die Steuerwelle 22 und ein Abschlußmodul 124 mit einem Deckel 126 abgeschlossen werden. Bei höherem Aufbau bzw. abhängig von der Beanspruchung der Bewegungsmodule können Lagermodule 120 mit Lager 122 auch zwischen anderen Bewegungs- und Arbeitsmodulen eingefügt werden. Die Gewindestangen 78 sind zur Fixierung der aufeinander gestellten Bearbeitungsmodule vom Deckel 126 zum Gerätefuß 76 durchgeführt. Eine Ausrichtung ergibt sich dadurch, daß in ringförmige Ausnehmungen an den oberen und unteren Stirnenden der Bearbeitungsmodule Zentrierringe 130 eingesetzt werden und bevorzugt zusätzlich an jeweils einer Ecke Paßstifte 210 in Bohrungen 209 eingefügt sind, die die Elemente gegen Verdrehung sichern.

Figur 1 zeigt eine Ausführung des Gerätefußes 252, auf dessen Außenmantel über Lager 254,256 ein Rohr 258 drehbar gelagert ist, auf dem der Stern 36 des Schaltantriebs angebracht ist. An der oberen Stirnseite des Rohres 258 ist eine Platte 260 angeflanscht, auf der die verschiedensten Geräteelemente aufgebaut sein können, welche unter Weiterschalten in Drehrichtung durch den Schaltantrieb in Gegenüberstellung mit gewünschten Bewegungsmodulen kommen.

Figur 6 zeigt den in horizontaler Richtung wirkenden Bewegungsmodul 92 im einzelnen. Ein vorzugsweise quadratischer Rahmen 132 besitzt an zwei gegenüberliegenden Seiten einander entsprechende Schlitze 134,136, die zur Führung des Schiebers 98 dienen. Der Schieber trägt die Rolle 96 (vergleiche auch Figur 4 und 5), die auf der Scheibenkurve 99 läuft, welche mittels einem an ihr angebrachten Klemmring 140 auf der Steuerwelle 22 befestigt wird. Die Steuerwelle 22 ist durch ein Langloch 142 des Schiebers 98 geführt und behindert somit nicht dessen Bewegung.

Zur exakten Führung des Schiebers 98 sind an den Rahmen 132 zu dem jeweils verwendeten Schieber 98 passende Führungselemente 144 anbringbar, was mittels Schrauben, Klemmen, Stiften oder dergleichen erfolgen kann. Zwischen den Führungselementen 144 lassen sich ferner Führungsstangen 166 einsetzen, die die Führungselemente für Rückholfedern 204 für den Schieber 98 darstellen. Die Rückholfedern 204 greifen über Federhaltebolzen 206 am Schieber 98 bzw. an der Rolle 96 an. Abdeckelemente 148 dienen dazu, zum Einstellen der Steuerkurven 99 benötigte Öffnungen 208 zu verschließen.

Eine aus verschiedenen Bewegungsmodulen aufgebaute Bearbeitungsstation 20 läßt sich nach Lösen des Gerätefußes vom Maschinentisch 12 sogar bei laufender Montagemaschine und Drehen der Steuerwelle 22 vom Maschinentisch 12 abheben. Sie ist somit beliebig aus- und einbaubar. Hierbei ist kein Zugriff unter den Maschinentisch 12 erforderlich, so daß dieser nach unten hin durch ein Gehäuse abgeschlossen sein kann. Wie bereits erwähnt, kann die Höhe des Gerätefußes den Verhältnissen angepaßt werden. Zweckmäßigerweise wird man Gerätefüße in abgestuften Längen vorrätig haben.

Modular aufgebaute Bearbeitungsstation
für Montagevorgänge

P a t e n t a n s p r ü c h e

1. Modular aufgebaute Bearbeitungsstation für Montagevorgänge, insbesondere von Glühlampen, zum Einsatz
auf Rundtakt- oder Längstaktmaschinen, welche synchron mit einer Schaltbewegung eine kontinuierliche
Drehbewegung über einen Antrieb auf eine in der
Bearbeitungsstation integrierte an den Antrieb angekuppelte Steuerwelle übertragen, die die Drehbewegung
an nach dem Baukastenprinzip übereinander angeordnete
Module abgibt, die die Drehbewegung in eine andere
für den Montagevorgang benötigte Bewegungsform umwandeln,
d a d u r c h   g e k e n n z e i c h n e t ,
daß die zwischen Antrieb (14) und Steuerwelle (22)
angeordnete Steckkupplung (50) einen Kupplungszapfen
(64) aufweist, der so gestaltet ist, daß nur eine
einzige Steckposition möglich ist, daß die Module
(82,92,102,112) über Zentriervorrichtungen (130) in
Richtung der Steuerwelle (22) exakt ausgerichtet und
mittels Spannvorrichtungen (76,78,126) am Gerätefuß
(52) fixiert sind, und daß zwischen den Modulen
und/oder am obersten freien Ende der Steuerwelle (22)
ein Lagermodul (120) für die Steuerwelle (22)
eingefügt ist.

2. Bearbeitungsstation nach Anspruch 1,
d a d u r c h   g e k e n n z e i c h n e t ,

daß Gerätefüße (52) mit abgestuften Längen verwendet werden.

3. Bearbeitungsstation nach Anspruch 1 oder 2,
   d a d u r c h   g e k e n n z e i c h n e t ,
   daß die Spannvorrichtungen aus Gewindestangen (78) bestehen, die zwischen einem die Module (82,92,102,-112) nach oben abschließenden, zentrierten Deckel (126) und einem an der Oberseite des Gerätefußes (52) ausgebildeten Flansch (76) in umfangsmäßiger Verteilung um die Steuerwelle (22) angeordnet sind.

4. Bearbeitungsstation nach einem der vorhergehenden Ansprüche,
   d a d u r c h   g e k e n n z e i c h n e t ,
   daß zwischen die Module (82,9,102,112) Montageplatten (54) zum Aufsetzen von gerätespezifischen Aufbauten einfügbar sind.

5. Bearbeitungsstation nach einem der vorhergehenden Ansprüche,
   d a d u r c h   g e k e n n z e i c h n e t ,
   daß für den Schaltantrieb auf dem Mantel (258) des Gerätefußes (252) eine Antriebsschaltvorrichtung (36) drehbar gelagert ist.

6. Bearbeitungsstation nach einem der vorhergehenden Ansprüche,
   d a d u r c h   g e k e n n z e i c h n e t ,
   daß die Module (z.B. 92) aus einem quadratischen Rahmen (132) bestehen, dessen Seitenwände mit unterschiedlichen Öffnungen (z.B. 136) zum Durchführen verschiedener Bewegungselemente (z.B. 98) versehen sind.

7. Bearbeitungsstation nach Anspruch 6,
d a d u r c h   g e k e n n z e i c h n e t ,
daß an den Seitenwänden des quadratischen Rahmens
(132) den Bewegungselementen (98) angepaßte Führungsglieder (144) anbringbar sind.

8. Bearbeitungsstation nach Anspruch 6 oder 7,
d a d u r c h   g e k e n n z e i c h n e t ,
daß an den Seitenwänden des quadratischen Rahmens
(132) Öffnungen vorgesehen sind, durch die die
Steuerkurven (94) von außen einstellbar sind, und daß
die Öffnungen mittels Abdeckungen (148) verschließbar
sind.

9. Bearbeitungsstation nach einem der vorhergehenden
Ansprüche,
d a d u r c h   g e k e n n z e i c h n e t ,
daß zum Antrieb der Bewegungselemente (z.B. 98) der
einzelnen Module (z.B. 92) Kurvenscheiben (99)
mittels einer Klemmvorrichtung (140) in beliebiger
Höhe an der Steuerwelle (22) fixierbar sind.

10. Montagemaschine unter Verwendung mehrerer Bearbeitungsstationen nach einem der vorhergehenden Ansprüche,
d a d u r c h   g e k e n n z e i c h n e t ,
daß für den synchronen Schaltantrieb aller Bearbeitungsstationen (20) ein gemeinsamer, innerhalb der
Maschine liegender Antrieb (16) vorgesehen ist, und
daß der gemeinsame Antrieb (16) über je eine
Übertragungsvorrichtung (22,32,34) mit je einer
Bearbeitungsstation (20) in Verbindung steht, wobei
die Übertragungsvorrichtung zwischen der Mitte der
Montagemaschine und den Bearbeitungsstationen angeordnet ist.

11. Montagemaschine nach Anspruch 10,
dadurch gekennzeichnet,
daß der gemeinsame Antrieb ein sich unterhalb des
Maschinentisches (12) befindliches Zahnrad (16) ist,
und daß jede Übertragungsvorrichtung aus einem in das
Zahnrad (16) eingreifenden Ritzel (18), einer im
Montagetisch (12) gelagerten Welle, einem davon
angetriebenen Kettenrad (32) und einer zur Bearbeitungsstation führenden Kette (34) besteht.

FIG. 1

FIG. 2

0208133

FIG. 3

FIG. 4

3/5    0208133

FIG. 5

FIG. 6

FIG. 7

0208133